(19) **Europäisches Patentamt**
**European Patent Office**
**Office européen des brevets**

(11) **EP 2 597 836 A1**

(12) **EUROPEAN PATENT APPLICATION**
published in accordance with Art. 153(4) EPC

(43) Date of publication:
**29.05.2013 Bulletin 2013/22**

(51) Int Cl.:
***H04L 27/00*** *(2006.01)*

(21) Application number: **11809197.4**

(22) Date of filing: **20.05.2011**

(86) International application number:
**PCT/CN2011/074396**

(87) International publication number:
**WO 2012/010009 (26.01.2012 Gazette 2012/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2010 CN 201010234489**

(71) Applicant: **ZTE Corporation**
**Shenzhen, Guangdong 518057 (CN)**

(72) Inventors:
• **WANG, Yanyun**
**Shenzhen**
**Guangdong 518057 (CN)**

• **WANG, Meiying**
**Shenzhen**
**Guangdong 518057 (CN)**
• **YUAN, Xiaochao**
**Shenzhen**
**Guangdong 518057 (CN)**
• **YANG, Ning**
**Shenzhen**
**Guangdong 518057 (CN)**

(74) Representative: **Jansen, Cornelis Marinus et al**
**V.O.**
**Johan de Wittlaan 7**
**2517 JR Den Haag (NL)**

(54) **METHOD AND BASE STATION FOR SCHEDULING CONTROL**

(57)    A method and base station for scheduling control are provided in the invention, wherein the method includes the following steps: the base station estimates the channel quality of a user equipment end uplink channel, and obtains an estimated value; the base station, according to the estimated value, determines whether the quality of the uplink channel meets a predetermined criterion, and obtains a determination result; and when the determination result indicates that the quality of the uplink channel meets the predetermined criterion, the base station performs scheduling control by using the demodulated feedback information returned by the user equipment, otherwise, controls the feedback information to unfit the feedback information for scheduling control. In the invention, the erroneous feedback information is avoided to be used for scheduling control, and the transmission performance is improved.

Fig. 1

**Description**

**Field of the invention**

The present invention relates to the field of mobile communication, and in particular to a method and a base station for scheduling control.

**Background of the Invention**

The mobile communication technology has the characteristics of mobility, freedom, and no limitation of time and location. The mobile communication technology is deeply changing people's life style and behavioral pattern. Mobile Internet, mobile multimedia et al. becomes the development direction of mobile service. An abundant data service needs a platform which ensures high data width and quality of service (QoS). The mobile internet has begun to evolve towards the next generation mobile communication system providing a radio broadband service. In order to meet the growing requirement of multimedia services for high speed data transmission , after R99 and R4 of the Wideband Code Division Multiple Access (WCDMA) standard, and since R5, the 3rd Generation Partner Project (3GPP) discloses a high speed data transmission technology named High Speed Downlink Package Access (HSDPA) technology.

Comparing with Release99 edition, the HSDPA greatly enhances the downlink transmitting function. The fact that HSDPA service is backward compatible with Release99 also becomes one of the reasons why the HSDPA is favored by the operator. The subsequent Multi Input Multi Output (MIMO) service provides possibility to further improve the data service rate.

When a base station performs scheduling control, it needs to use the feedback information returned by the user equipment. Therefore the accurate and timely transmission of the feedback information is very important for the scheduling control of the network side. For example, after the ACK/NACK is acquired in time, the erroneous process can be retransmitted, or a new process can be transmitted in time. Then, the modulation and coding mode can be adjusted in time according to the Channel Quality Indicator (CQI) and in combination with the Adaptive Modulation and Coding (AMC) technology, to adapt to the radio link adaptation.

However, there exists the situation that the radio environment is changing rapidly. For instance, the User Equipment (UE) comes into a shadow domain, or the uplink is suddenly subjected to a short-term strong interference, or the UE is in the handover zone with relatively poor uplink signal. In this case, there may be the case wherein the uplink power control adjustment still cannot ensure the uplink transmission quality. Therefore, there is the possibility that erroneous feedback information is returned by the user equipment due to the poor transmission quality. If the system performs scheduling control according to the erroneous feedback information, it will affect the scheduling control and system transmission performance.

**Summary of the Invention**

The object of the present invention is to provide a method and base station for scheduling control, which reduces the influence of lowered system transmission performance caused by the channel quality problem.

In order to realize the above mentioned object, the embodiment of the present invention provides a method for scheduling control, wherein the method comprises:

a base station estimating quality of an uplink channel at a user equipment end, and obtaining an estimated value;
the base station, according to the estimated value, determining whether the quality of the uplink channel meets a predetermined criterion, and obtaining a determination result; and
when the determination result indicates that the quality of the uplink channel meets the predetermined criterion, the base station performing scheduling control by using demodulated feedback information returned by a user equipment, otherwise, controlling the feedback information to unfit the feedback information for scheduling control.

In the above mentioned method, the method for scheduling control is applied in a Wideband Code Division Multiple Access (WCDMA) mobile communication system.

In the above mentioned method, the method for scheduling control is applied for a high speed downlink packet access service and/or a multiple input multiple output service.

In the above mentioned method, the feedback information is Channel Quality Information (CQI).

In the above mentioned method, the estimated value is an estimated value of a Signal-to-Interference Ratio (SIR) or an estimated value of a Bit Error Rate (BER).

In the above mentioned method, the estimated value is an estimated value of an SIR of a CQI domain in a High Speed Dedicated Physical Control Channel (HS-DPCCH).

In the above mentioned method, the estimated value of the SIR of the CQI domain of a current subframe is: $\alpha$ $SIR_{HS\text{-}DPCCH\text{-}CQI\text{-}current}$ + (1-$\alpha$) $SIR_{HS\text{-}DPCCH\text{-}CQI\text{-}History}$ , wherein $0<\alpha<=1$, $SIR_{HS\text{-}DPCCH\text{-}CQI\text{-}current}$ is a measured value of the SIR of the CQI domain of the HS-DPCCH in the current subframe, and $SIR_{HS\text{-}DPCCH\text{-}CQI\text{-}current}$ is the estimated value of the SIR of the CQI domain of the HS-DPCCH of a previous subframe.

In the above mentioned method, when the determination result indicates that the quality of the uplink channel does not meet the predetermined criterion, the base station directly sends the minimum data block.

In order to realize the above mentioned object, the embodiment of the present also provides a base station, comprising:

an estimating module, configured to estimate quality of an uplink channel, and obtain an estimated value;

a determination module, configured to, according to the estimated value, determine whether the quality of the uplink channel meets a predetermined criterion, and obtain a determination result; and

a scheduling control module, configured to, when the determination result indicates that the quality of the uplink channel meets the predetermined criterion, perform scheduling control by using demodulated feedback information returned by a user equipment, otherwise, control the feedback information to unfit the feedback information for scheduling control.

In the above mentioned base station, the base station is applied in a Wideband Code Division Multiple Access (WCDMA) mobile communication system.

In the above mentioned base station, the feedback information is Channel Quality Information (CQI).

In the above mentioned base station, the estimated value is an estimated value of a Signal-to-Interference Ratio (SIR) or an estimated value of a Bit Error Rate (BER).

In the above mentioned base station, the estimated value is an estimated value of an SIR of a CQI domain in a High Speed Dedicated Physical Control Channel (HS-DPCCH).

In the above mentioned base station, the scheduling control module is further configured to, when the determination result indicates that the quality of the uplink channel does not meet the predetermined criterion, directly send the minimum data block.

The embodiment of the present invention has the beneficial effects as follows.

In the embodiment of the present invention, the parameter indicating the channel quality of an uplink channel is measured, and the quality of the uplink channel is estimated by using the measured value. When the estimated uplink channel quality indicates that the quality of the uplink channel does not meet the predetermined criterion, it indicates that the feedback information transmitted through the uplink channel and used for scheduling control may be erroneous. In this case, the feedback information is discarded to unfit the feedback information for scheduling control. Thus, this solution avoids that erroneous feedback information is used for scheduling control. The transmission performance is improved.

The method and base station for scheduling control in the embodiment of the present invention do not increase hardware complexity. And, this solution can effectively resist the influence caused by the radio environment, and guarantee the correct use of the feedback information returned by the user equipment for scheduling control. This solution can greatly improve the uplink CQI scheduling performance in the cell edge area, and thus further improve the accuracy of scheduling control and ensure the service throughput.

**Brief Description of the Drawings**

Figure 1 is a flow schematic diagram of the method for scheduling control according to the embodiment of the present invention;

Figure 2 is a structure schematic diagram of the base station according to the embodiment of the present invention;

Figure 3 is a HS-DPCCH channel structure schematic diagram; and

Figure 4 is a detailed flow schematic diagram of a method when CQI and SIR are used according to the embodiment of the present invention.

**Detailed Description of Embodiments**

In the method and base station for scheduling control in the embodiment of the present invention, it is determined whether the feedback information for scheduling control is used for the present scheduling control according to the channel quality condition of the present uplink channel. Thus, the solution can avoid the problem that a large number of application layer data can be lost due to that the network side uses erroneous data for scheduling control and deviates from the performance requirement of the air interface.

The method and base station for scheduling control in the in the embodiment of the present invention can effectively resist the influence caused by the radio environment and improve the CQI demodulation correctness without increasing the hardware complexity. It can greatly improve the uplink CQI scheduling performance in the cell edge area, and thus further improve the accuracy of scheduling control and ensure the service throughput.

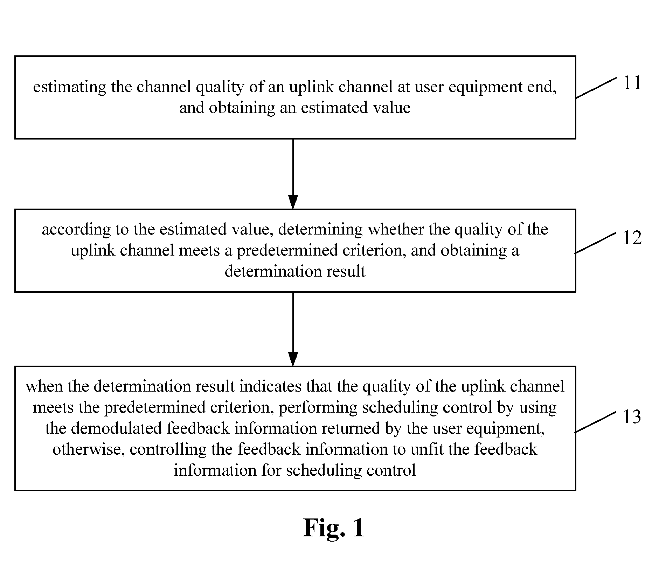

The method for scheduling control according to the embodiment of the present invention is as shown in figure 1, which comprises:

Step 11, a base station estimates the channel quality of an uplink channel at user equipment end, and obtains an estimated value;

Step 12, the base station, according to the estimated value, determines whether the quality of the uplink channel meets a predetermined criterion, and obtains a determination result; and;

Step 13, when the determination result indicates that the quality of the uplink channel meets the predetermined criterion, the base station performs scheduling control by using the demodulated feedback information returned by the user equipment, otherwise, controls the feedback information to unfit the feedback information for scheduling control.

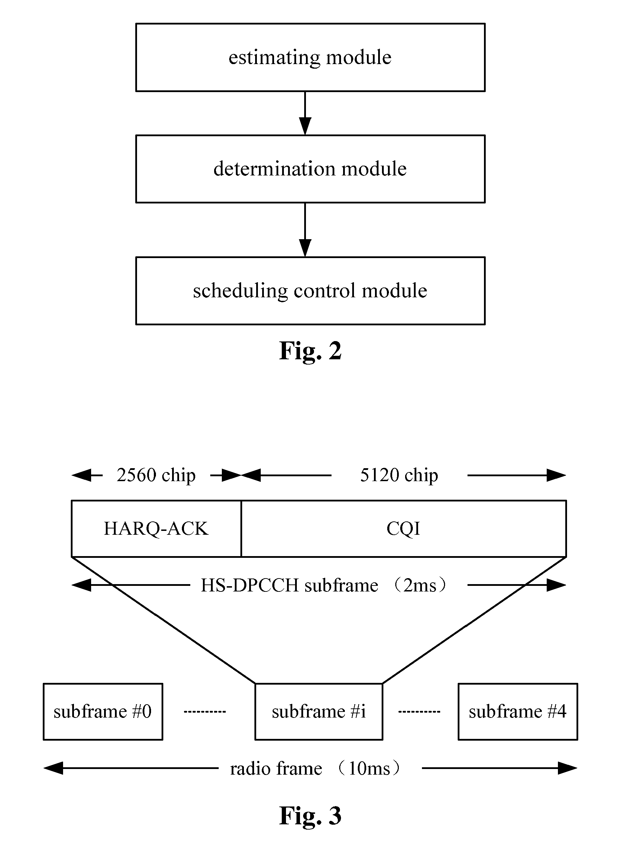

The base station according to the embodiment of the present invention is as shown in figure 2, which comprises:

an estimating module, configured to estimate the channel quality of an uplink channel, and obtain an estimated value;

a determination module, configured to, according to the estimated value, determine whether the quality of the uplink channel meets a predetermined criterion, and obtain a determination result; and

a scheduling control module, configured to, when the determination result indicates that the quality of the uplink channel meets the predetermined criterion, perform scheduling control by using the demodulated feedback information returned by the user equipment, otherwise, control the feedback information to unfit the feedback information for scheduling control.

The method and base station in the embodiment of the present invention can be applied in a variety of mobile communication systems including the WCDMA system. The following description only uses the WCDMA as an example.

In the embodiment of the present invention, the feedback information is the information returned by the user equipment for scheduling control, such as the CQI and/or ACK/NACK in the HSDPA, or the CQI and/or ACK/NACK in the MIMO service.

In the embodiment of the present invention, it needs to estimate the channel quality of an uplink channel to determine whether to use the feedback information to perform scheduling control. The channel quality of the uplink channel can be described by various kinds of parameters, such as Signal-to-Interference Ratio (SIR), Bit Error Ratio (BER) etc.

Hereinafter, the implementation process of the embodiment of the present invention is described by taking the condition that the service is the HSDPA service, the feedback information is the CQI, and the channel quality of the uplink channel is described by the SIR as an example.

The HSDPA technology newly adds channels such as the High Speed Dedicated Physical Control Channel (HS-DPCCH), the High Speed Shared Physical Control Channel (HS-SCCH), the High-Speed Physical Downlink Shared Channel (HS-PDSCH) etc.

In the above, the HS-DPCCH is the uplink control channel in cooperation with the HS-PDSCH. The channel structure of the HS-DPCCH is as shown in figure 3. And the HS-DPCCH is used for bearing the ACK/NACK and CQI information. The ACK/NACK domain represents the HS-PDSCH decoding result, and the CQI domain indicates the downlink channel quality. The relationship between the CQI and the ratio of energy per symbol to noise power density of the HS-PDSCH $Es/No_{HS\text{-}PDSCH}$ is as follows:

$$Es/No_{HS-PDSCH} = -4.5 + CQI$$

The CQI reporting process of the UE side is that the UE first estimates the ratio of energy per chip to interference power density of the common pilot $Ec/Io_{CPICH}$.

Then, the UE calculates the ratio of energy per chip to noise power density of the High-Speed Downlink Shared Channel (HS-DSCH) $Ec/No_{HS\text{-}DSCH}$ according to the Measure Power Offset (MPO) value configured by the UMTS Terrestrial Radio Access Network (UTRAN):

$$Ec/No_{HS-DSCH} = Ec/Io_{HS-DSCH} + MPO.$$

Then, the UE calculates the ratio of the energy per symbol to the noise power density of the HS-DSCH $Es/No_{HS-DSCH}$ according to $Ec/No_{HS-DSCH}$:

$$Es/No_{HS-DSCH} = Ec/No_{HS-DSCH} + 10\log(16).$$

Subsequently, the UE acquires the CQI by searching a table according to the calculated $Es/No_{HS-DSCH}$. The table is obtained from link level simulation result of the HS-DSCH BLER (Block Error Ratio) and $Es/No_{HS-DSCH}$. Protocol 25.214 gives the corresponding relationship of the CQI, the transport block size, the HS-PDSCH code channel and the modulation mode.

Finally, the UE transmits the acquired CQI to network device side by using the HS-DPCCH.

After a base station demodulates the CQI returned by the user equipment for scheduling control, the base station does not know whether the demodulated CQI is identical with the CQI returned by the user equipment. In this case, the base station estimates the SIR value of the HS-DPCCH, and then compares the estimated value with a target value. When the estimated value is smaller, the CQI in the HS-DPCCH is discarded. Otherwise, the CQI is used to perform scheduling control.

Certainly, when determining whether the CQI is to be used for the following scheduling control, the most accurate method is that the base station estimates the SIR value of the CQI domain of the HS-DPCCH. But it should be understood that the base station also can make the determination by estimating the SIR value of other HS-DPCCH domain, such as the ACK/NACK domain.

In the embodiment of the present invention, the estimated value can be obtained directly by using the current measured value. Certainly, in order to eliminate the measuring error, in the embodiment of the present invention, the estimated value can also be obtained by using the current measured value and the historical estimated value as follows:

$$\alpha \, SIR_{HS-DPCCH-CQI-current} + (1-\alpha) \, SIR_{HS-DPCCH-CQI-History}.$$

In the above, the filtering coefficient $\alpha$ is between 0 and 1. $SIR_{HS\text{-}DPCCH\text{-}CQI\text{-}History}$ is the estimated value of the SIR of the CQI domain of the HS-DPCCH of a previous subframe. $\alpha$ can be set as needed. If the effect of the current value on the estimated value is considered to be more important, then $\alpha$ can be set to be more than 0.5. If the effect of the historical value on the estimated value is considered to be more important, then $\alpha$ can be set to be less than 0.5. Therefore, the larger $\alpha$ is, the larger the weight of the current measured value is. The less $\alpha$ is, the larger the weight of the historical measured value is.

Certainly, it also can use a plurality of historical values to calculate the estimated value. These similar solutions are not described repeatedly herein.

The application of the technical solution is further described hereinafter in detail in conjunction with the drawings.

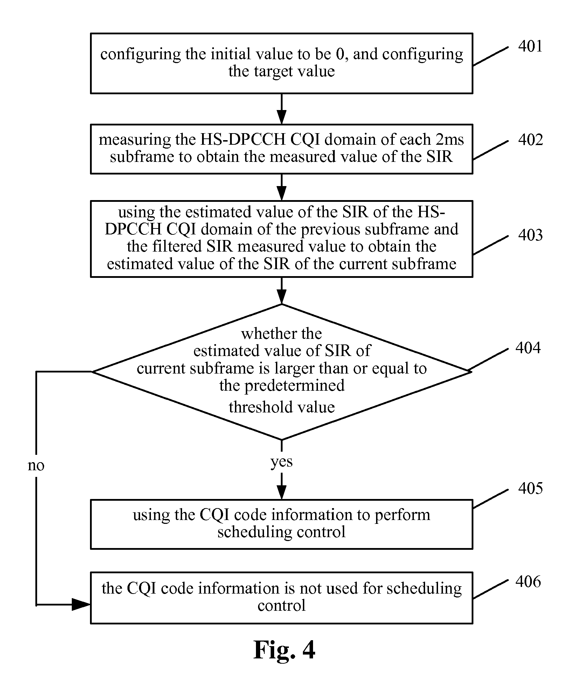

A specific flow schematic diagram of the embodiment of the present invention is shown in figure 4, comprising the following steps.

Step 401, configuring the initial value $SIR_{HS\text{-}DPCCH\text{-}CQI\text{-}History}$ to be 0, and configuring the target value $SIR_{HS\text{-}DPCCH\text{-}CQI\text{-}target}$. Setting the initial value is for the initialization that is required when performing SIR filtration. Setting the target value is to provide a threshold value for the comparison after the SIR estimation. The threshold value is set according to a simulation value or an actual testing value. If the step is not correctly configured, all the following operation cannot be normally operated, and the following SIR estimation cannot be completed.

Step 402, measuring the CQI domain of the HS-DPCCH of each 2ms subframe to obtain the measured value of the SIR $SIR_{HS\text{-}DPCCH\text{-}CQI\text{-}current}$.

Step 403, using the estimated value of the SIR of the CQI domain of the HS-DPCCH of the previous subframe $SIR_{HS\text{-}DPCCH\text{-}CQI\text{-}History}$ and the filtered $SIR_{HS\text{-}DPCCH\text{-}CQI\text{-}current}$ to obtain the estimated value of the SIR of the current subframe $SIR_{HS\text{-}DPCCH\text{-}CQI\text{-}current}$ as follows:

$$\alpha \, SIR_{HS-DPCCH-CQI-current} + (1-\alpha) SIR_{HS-DPCCH-CQI-History}.$$

Step 404, determining whether the estimated value of the SIR of the current subframe $SIR_{HS\text{-}DPCCH\text{-}CQI\text{-}current}$ is larger than or equal to the predetermined threshold value $SIR_{HS\text{-}DPCCH\text{-}CQI\text{-}target}$. If yes, step 405 is executed, otherwise, step 406 is executed.

Step 405, when $SIR_{HS\text{-}DPCCH\text{-}CQI\text{-}current}$ is larger than or equal to $SIR_{HS\text{-}DPCCH\text{-}CQI\text{-}target}$, it indicates that the current uplink radio quality is not deteriorated to be outside the threshold, and the decoded CQI can be used. Then, the decoded CQI information is used for scheduling control, such as selecting a transport block, a code channel, a modulation mode etc., and power scheduling.

Step 406, when $SIR_{HS\text{-}DPCCH\text{-}CQI\text{-}current}$ is less than $SIR_{HS\text{-}DPCCH\text{-}CQI\text{-}target}$, it indicates that the current uplink radio quality is deteriorated, and the decoded CQI is unreliable. Then, the decoded CQI is set to be an invalid value and the decoded CQI information is discarded to unfit the decoded CQI information for scheduling control. After setting the CQI determined to be unreliable to be an invalid value, if following data scheduling and processing needs to be performed according to the CQI, the data scheduling is not performed in order to avoid losing more data and leading to a suddenly lowered speed due to the poor radio environment.

CQI filtration is performed according to the above operations. By combining with the SIR estimation of CQI domain of the HS-DPCCH, it can improve the correctness of uplink decoded CQI. This solution ensures the scheduler to acquire the correct decoded CQI and schedule according to the CQI, and avoids the erroneous scheduling caused by inaccurate decoded CQI.

In the embodiment of the present invention, when the decoded CQI is unreliable, scheduling control is not performed according to the decoded CQI information. In this case, scheduling control can be performed according to various kinds of default strategies, such as sending the minimum data block.

In the embodiment of the present invention, the detailed description is given by taking the SIR as an example. But, it should be understood that the SIR is only one parameter which can indicate the channel quality. Other parameters which can indicate the channel quality, such as the BER, can also be used for the embodiment of the present invention.

Different from the solution using the SIR, the measured value of the BER is obtained by measuring the CQI domain of the HS-DPCCH of each 2ms subframe. The estimated value of the BER is obtained according to the measured value. Subsequently, it needs to compare the estimated value of the BER with the target value of the BER. When the estimated value of the BER is less than or equal to the target value of the BER, it indicates that the current uplink radio quality is not deteriorated to be outside the threshold, and the decoded CQI can be used. Then, the decoded CQI information is used for scheduling control, such as selecting a transport block, a code channel, a modulation mode etc., and power scheduling.

If the estimated value of the BER is larger than the target value of the BER, it indicates that the present uplink radio quality is deteriorated, and the decoded CQI is unreliable. Then, the decoded CQI is set to be an invalid value, so that the decoded CQI information will not be used for scheduling control.

Certainly, the above mentioned content is the description taking the CQI as an example. But, the same result can also be used for controlling the use of ACK/NACK carried by HARQ-ACK domain. If the uplink radio quality is not deteriorated to be outside the threshold, then the ACK/NACK is used for retransmission scheduling control, otherwise, the ACK/NACK code information is discarded to unfit the ACK/NACK code information for scheduling control.

In the embodiment of the present invention, the parameter indicating the channel quality of an uplink channel is measured, and the quality of the uplink channel is estimated by using the measured value. When the estimated uplink channel quality indicates that the quality of the uplink channel does not meet the predetermined criterion, it indicates that the feedback information transmitted through the uplink channel and used for scheduling control may be erroneous. In this case, the feedback information is discarded to unfit the feedback information for scheduling control. Thus, this solution avoids that erroneous feedback information is used for scheduling control. The transmission performance is improved.

Above description is only to illustrate the preferred embodiments of the present invention. It should be pointed out that for those skilled in the art, several improvements and modifications can be made to the present invention without departing from the technical principle of the present invention. These improvements and modifications also should be regarded as within the scope of protection of the present invention.

**Claims**

**1.** A method for scheduling control, **characterized by** comprising:

a base station estimating quality of an uplink channel at a user equipment end, and obtaining an estimated value;
the base station, according to the estimated value, determining whether the quality of the uplink channel meets a predetermined criterion, and obtaining a determination result; and
when the determination result indicates that the quality of the uplink channel meets the predetermined criterion, the base station performing the scheduling control by using demodulated feedback information returned by a user equipment, otherwise, controlling the feedback information to unfit the feedback information for the scheduling control.

2. The method for scheduling control according to Claim 1, **characterized in that** the method for scheduling control is applied in a Wideband Code Division Multiple Access (WCDMA) mobile communication system.

3. The method for scheduling control according to Claim 2, **characterized in that** the method for scheduling control is applied for a high speed downlink packet access service and/or a multiple input multiple output service.

4. The method for scheduling control according to Claim 3, **characterized in that** the feedback information is Channel Quality Information (CQI).

5. The method for scheduling control according to Claim 4, **characterized in that** the estimated value is an estimated value of a Signal-to-Interference Ratio (SIR) or an estimated value of a Bit Error Rate (BER).

6. The method for scheduling control according to Claim 4, **characterized in that** the estimated value is an estimated value of an SIR of a CQI domain in a High Speed Dedicated Physical Control Channel (HS-DPCCH).

7. The method for scheduling control according to Claim 6, **characterized in that** the estimated value of the SIR of the CQI domain of a current subframe is: $\alpha\ SIR_{HS-DPCCH-CQI-current} + (1-\alpha)\ SIR_{HS-DPCCH-CQI-History}$, wherein $0<\alpha<=1$, $SIR_{HS-DPCCH-CQI-current}$ is a measured value of the SIR of the CQI domain of the HS-DPCCH in the current subframe, and $SIR_{HS-DPCCH-CQI-current}$ is the estimated value of the SIR of the CQI domain of the HS-DPCCH of a previous subframe.

8. The method for scheduling control according to any one of Claims 1-7, **characterized in that** when the determination result indicates that the quality of the uplink channel does not meet the predetermined criterion, the base station directly sends the minimum data block.

9. A base station, **characterized by** comprising:

an estimating module, configured to estimate quality of an uplink channel, and obtain an estimated value;
a determination module, configured to, according to the estimated value, determine whether the quality of the uplink channel meets a predetermined criterion, and obtain a determination result; and
a scheduling control module, configured to, when the determination result indicates that the quality of the uplink channel meets the predetermined criterion, perform the scheduling control by using demodulated feedback information returned by a user equipment, otherwise, control the feedback information to unfit the feedback information for the scheduling control.

10. The base station according to Claim 9, **characterized in that** the base station is applied in a Wideband Code Division Multiple Access (WCDMA) mobile communication system.

11. The base station according to Claim 10, **characterized in that** the feedback information is Channel Quality Information (CQI).

12. The base station according to Claim 11, **characterized in that** the estimated value is an estimated value of a Signal-to-Interference Ratio (SIR) or an estimated value of a Bit Error Rate (BER).

13. The base station according to Claim 11, **characterized in that** the estimated value is an estimated value of an SIR of a CQI domain in a High Speed Dedicated Physical Control Channel (HS-DPCCH).

14. The base station according to any one of Claims 9-13, **characterized in that** the scheduling control module is further configured to, when the determination result indicates that the quality of the uplink channel does not meet the predetermined criterion, directly send the minimum data block.

| estimating the channel quality of an uplink channel at user equipment end, and obtaining an estimated value | 11 |

| according to the estimated value, determining whether the quality of the uplink channel meets a predetermined criterion, and obtaining a determination result | 12 |

| when the determination result indicates that the quality of the uplink channel meets the predetermined criterion, performing scheduling control by using the demodulated feedback information returned by the user equipment, otherwise, controlling the feedback information to unfit the feedback information for scheduling control | 13 |

**Fig. 1**

estimating module

↓

determination module

↓

scheduling control module

**Fig. 2**

| ← 2560 chip → | ← 5120 chip → |
|---|---|
| HARQ-ACK | CQI |

← HS-DPCCH subframe （2ms） →

| subframe #0 | -------- | subframe #i | -------- | subframe #4 |
|---|---|---|---|---|

← radio frame （10ms） →

**Fig. 3**

Fig. 4

<table>
<tr><td colspan="2" align="center">**INTERNATIONAL SEARCH REPORT**</td><td>International application No.<br><br>PCT/CN2011/074396</td></tr>
</table>

**A. CLASSIFICATION OF SUBJECT MATTER**

H04L 27/00（2006.01）i

According to International Patent Classification (IPC) or to both national classification and IPC

**B. FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNKI, CNABS, VEN: channel quality，CQI，estimat+, comput+，schedul+，base station，predetermin+

**C. DOCUMENTS CONSIDERED TO BE RELEVANT**

| Category* | Citation of document, with indication, where appropriate, of the relevant passages | Relevant to claim No. |
|---|---|---|
| X | CN101278533 A (MATSUSHITA ELECTRIC IND. CO., LTD.) 01 October 2008 (01.10.2008) Description page 4, lines 10-18; page 9, lines 10-18; claim 6 | 1-6，8-14 |
| A | CN101287281 A (BEIJING SAMSUNG TELECOM R & D CENT. et al.) 15 October 2008 (15.10.2008) the whole document | 1-14 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim (S) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&"document member of the same patent family |
| Date of the actual completion of the international search<br><br>19 July 2011 (19.07.2011) | Date of mailing of the international search report<br><br>**25 Aug. 2011 (25.08.2011)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>Rao, Jun<br><br>Telephone No. (86-10)62411456 |

Form PCT/ISA /210 (second sheet) (July 2009)

**INTERNATIONAL SEARCH REPORT**
Information on patent family members

| | International application No. |
|---|---|
| | PCT/CN2011/074396 |

| Patent Documents referred in the Report | Publication Date | Patent Family | Publication Date |
|---|---|---|---|
| CN101278533 A | 01.10.2008 | EP1914948 A1 | 23.04.2008 |
| | | WO2007037412 A1 | 05.04.2007 |
| | | JP2007537723 T2 | 16.04.2009 |
| | | US2010188984 A1 | 29.07.2010 |
| | | RU2008112140 A | 10.11.2009 |
| CN101287281 A | 15.10.2008 | WO2008127038 A1 | 23.10.2008 |

Form PCT/ISA /210 (patent family annex) (July 2009)